(19) Europäisches Patentamt / European Patent Office / Office européen des brevets

(11) **EP 4 335 911 A1**

(12) **EUROPÄISCHE PATENTANMELDUNG**

(43) Veröffentlichungstag:
**13.03.2024  Patentblatt 2024/11**

(21) Anmeldenummer: 23195934.7

(22) Anmeldetag: **07.09.2023**

(51) Internationale Patentklassifikation (IPC):
**C09J 7/21** *(2018.01)*　　　**C09J 7/38** *(2018.01)*
**C09J 11/06** *(2006.01)*　　**C09J 133/08** *(2006.01)*

(52) Gemeinsame Patentklassifikation (CPC):
**C09J 7/385; C09J 133/08;** C09J 2203/31;
C09J 2400/283

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **07.09.2022  DE 102022122740**

(71) Anmelder: **tesa SE**
**22848 Norderstedt (DE)**

(72) Erfinder:
• FOMENKO, Eugen
  22848 Norderstedt (DE)
• EBERHARDT, Franziska
  22848 Norderstedt (DE)
• STAPELFELDT, Kane
  22848 Norderstedt (DE)
• JENSEN, Jan-Hendrik
  22848 Norderstedt (DE)
• SCHMITZ-STAPELA, Daniel
  22848 Norderstedt (DE)

(74) Vertreter: **tesa SE**
**Hugo-Kirchberg-Straße 1**
**22848 Norderstedt (DE)**

(54) **ACRYLATHAFTKLEBSTOFF SOWIE MIT DEM ACRYLATHAFTKLEBSTOFF AUSGERÜSTETES KLEBEBAND**

(57)　Es sollte ein Acrylathaftklebstoff zur Verfügung gestellt werden, der insbesondere in einem rückstandsfrei wiederabzulösenden, reversiblen Klebeband Verwendung findet, wobei das Klebeband einen besonders flachen Träger aus Papier mit hoher Luftdurchlässigkeit aufweist und damit in der Anwendung besonders präzise und flache Farbkanten generiert. Dies gelingt mit einem Acrylathaftklebstoff, basierend auf Polymeren, die die folgende Monomerzusammensetzung aufweisen:
(a) 97 bis 99 Gew.-% Monomere aus der Gruppe 2-Ethylhexylacrylat oder 2-Octylacrylat oder n-Heptylacrylat oder Mischungen aus mindestens zwei der genannten Monomere
(b) 1 bis 3 Gew.-% (Meth)acrylsäure
und weiterhin enthaltend ein Vernetzersystem, wobei das Verhältnis der reaktiven Vernetzergruppen und der Carboxygruppen von (Meth)acrylsäure (b) weniger oder gleich 7 % ist, wobei die Polymere durch Emulsionspolymerisation hergestellt werden. Gegenstand der Erfindung ist auch ein Klebeband, umfassend einen Träger und einen auf mindestens einer Seite des Trägers aufgebrachten, erfindungsgemäßen Acrylathaftklebstoff in Form einer getrockneten Polymerdispersion sowie die Verwendung eines solchen Klebebandes.

FIG.1

**Beschreibung**

Die Erfindung betrifft einen durch Emulsionspolymerisation hergestellten Acrylathaftklebstoff sowie ein mit dem Acrylathaftklebstoff ausgerüstetes Klebeband, das insbesondere als Abdeckklebeband eingesetzt werden kann.

Selbstklebende Abdeckbänder, im Folgenden auch als Abdeckklebeband oder Maskingklebeband bezeichnet, sind zumeist einseitig klebende Abdeckbänder mit Folien- oder Papierträgern, die zur temporären Abdeckung eines Untergrundes bei Lackierprozessen dienen, die temperaturbeständig bei unterschiedlichsten Verarbeitungsbedingungen sind und die rückstandslos wieder abgelöst werden können, und müssen wesentliche Eigenschaften aufweisen, damit sie die besonderen an sie gestellten Anforderungen erfüllen. Dies sind - ohne dass diese Aufstellung den Anspruch auf Vollständigkeit erhebt - eine geringe Dicke, eine ausreichende Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, der Widerstand gegenüber Farbdurchschlag, eine dosierte Klebkraft auf relevanten Untergründen und der eigenen Rückseite sowie eine händische Einreißbarkeit

Deshalb werden für Abdeckklebebänder bevorzugt Papierträger und dann solche eingesetzt, die durch die Art des verwendeten Zellstoffes, durch den Mahlgrad und durch bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind. Diese Rohstoffe und Verfahrensschritte sind ausschließlich der Kunst des Papiermachers überlassen und stehen dem Hersteller von Abdeckklebebändern in der Regel nicht zur Verfügung, da dieser im Regelfall das Rohpapier als Basis der Abdeckklebebands zukauft.

Die Dehnbarkeit ist eine wichtige Eigenschaft von Abdeckklebebändern. Denn sie ermöglicht die vollflächige und faltenfreie Verklebung in Kurven und auf sphärischen Oberflächen, wie sie zum Beispiel bei der Reparaturlackierung von Pkws notwendig ist; ein dehnbares Abdeckklebeband kann bei der Handapplikation weichen Konturen perfekt nachgeführt werden und führt so zu einer sauberen Farbkante ohne Farbunterläufer. Die dafür erforderliche Dehnbarkeit in Längsrichtung liegt bei Abdeckbändern auf Basis sogenannter Feinkreppträger im Bereich von 8 bis 15 % (Reißdehnung), bei solchen auf Basis von stark gekreppten Papierträgern um 20 bis 80 %. Zugfestigkeit und Dehnung sind so aufeinander abgestimmt, dass es problemlos gelingt, während der manuellen Applikation das Klebeband in Kurvenform zu verkleben, wobei ein Teil der Dehnung herausgezogen wird ohne dass das der Papierträger an der äußeren Seite der Kurve einreißt.

Neben den oben erwähnten Maskingklebebändern mit gekreppten Trägern gibt es auch solche, die einen ungekreppten Träger aufweisen (Flatback). Zu diesen Klebebändern gehören auch solche die auf sogenanntem Japanpapier (auch Washi oder Wagami) basieren. Aufgrund der fehlenden Kreppung haben die Träger eine geringere Dehnbarkeit. Diese liegt abhängig von der Papierstruktur, Faser- und Imprägniermitteltyp üblicherweise bei 3 bis 10 %. In der EP 2 159 321 A1 werden auch Beispiele mit Dehnungswerten von Trägerpapieren größer 10 % offenbart.

Der Begriff "Japanpapier" (beziehungsweise Washi oder Wagami) wird seit langem in der Literatur verwendet. Allerdings findet sich außer der Beschreibung der optischen und haptischen Eigenschaften keine exakte technische Definition dieses Papiertyps. Japanpapier ist ein traditionell handgeschöpftes, durchscheinendes Papier aus Japan. Heute werden Papiere mit dieser Optik bzw. Haptik auch industriell gefertigt.

Japanpapier wird überwiegend aus Fasern von Pflanzen gewonnen. Die bekanntesten klassisch verwendeten darunter sind Fasern aus Gampi, Kouzo und Mitsumata. Diese ergeben ein sehr zähes, widerstandsfähiges Papier aufgrund der eher längeren Fasern. Dies ist auch auf die Herstellungsprozedur zurückzuführen, da die Rinde der Pflanzen nicht zerschnitten, sondern durch Schlagen und Klopfen zerkleinert wird. In der industriellen Fertigung werden heute auch aus Nadel- und anderen Hölzern gewonnene Zellstofffasern und diverse synthetische Fasern eingesetzt.

Klebebänder aus Japanpapier weisen gegenüber konventionellen gekreppten Abdeckbändern eine Reihe von Vorteilen auf. Zum einen werden durch die geringe Dicke der Papiere besonders flache Farbkanten nach dem Überstreichen erzielt. Hierbei spielt auch eine Rolle, dass eine weitere spezielle Papiereigenschaft diesen Typs, die im Vergleich zu gekreppten Papieren geringere Biegesteifigkeit, es ermöglicht, eine ausreichende Verklebungssicherheit mit geringeren Klebkräften zu realisieren. Dies erlaubt eine deutliche Reduktion des benötigten Klebmasseauftrags im Vergleich zu Kreppklebebändern. Damit einhergehend wird gleichsam das Risiko von Klebmasserückständen und Untergrundbeschädigung minimiert.

Ein weiterer Vorteil des flachen, ungekreppten Papierträgers ist, dass Farbunterläufer, wie sie bei gekreppten Papieren im Bereich der Kreppfalten entstehen können, vermieden werden. Im Ergebnis werden mit Abdeckklebebändern auf Basis von Japanpapieren hochpräzise Farb- und Lackkanten realisiert.

Im Gegensatz zu den in der Regel nahezu blickdichten Kreppklebebändern sind Klebebänder auf Basis von Japanpapieren aufgrund der geringen Dicke und der homogenen Papierstruktur sehr oft mindestens semitransparent.

Damit ergibt sich in der Anwendung der Vorteil der präzisen Applikation (zum Beispiel bei der genauen Ausrichtung an Hilfslinien).

Bei dünnen Papier-Abdeckklebebändern liegt ein generelles Problem darin, eine ausreichende Dichtigkeit des Produkts sicherzustellen. Dies gilt für Klebebänder basierend auf gekreppten als auch auf ungekreppten Papieren.

Da einer der wesentliche Vorteile der Klebebänder auf Basis von Japanpapieren durch die geringe Dicke erzielt wird, fokussiert man sich bei der Gestaltung dieser Klebebänder auf einen möglichst flachen Aufbau (Papier + Klebmasse + eventuelle Funktionsschichten).

Eine ausreichende Dichtigkeit zu erzielen, ist daher bei diesen Klebebändern eine besondere Herausforderung.

Eine mangelnde Dichtigkeit eines Abdeckbandes wird für den Anwender beim Überstreichen mit Farbe oder Lack erkennbar, wenn nämlich partiell Farbe beziehungsweise Lack durch das Band auf den Untergrund durchschlagen. In so einem Fall verbleiben nach dem Abziehen des Bandes auf dem zu schützenden Untergrund höchst unerwünschte und in der Regel mühsam zu entfernende Reste getrockneter Farben.

Die Ursache dafür ist, dass die Trägerpapiere der Klebebänder sehr oft auch nach der Imprägnierung nicht vollständig gefüllte Hohlräume beziehungsweise Kapillaren aufweisen, welche auch durch die auf der Trägerunterseite aufgetragene Kleberschicht nicht abgedichtet werden.

Trotz der für den Fachmann bekannten Problematik gibt es im Markt einige Abdeckklebebänder, welche eine mangelnde Dichtigkeit aufweisen

Zur Vermeidung des beschriebenen Phänomens muss der Papierträger möglichst dicht gestaltet werden, indem entweder Papiere mit schwerer Grammatur und/oder besonders homogener Struktur und/oder höherer Menge an Imprägnierung verwendet werden. Ein weiteres Mittel zur Abdichtung des Trägers ist es, zusätzlich zur Imprägnierung eine Barriereschicht auf den Träger aufzutragen.

Die Wahl schwerer Träger ist aber aufgrund der dadurch bedingten höheren Produktkosten, der ebenfalls einhergehenden sinkenden Anschmiegsamkeit und im Besonderen aufgrund des aktuellen Trends im Bereich von Abdeckklebebändern - hin zu möglichst flachen, randscharfe Farbkanten liefernden Produkten für hochwertige Malerarbeiten - unerwünscht. Die Verwendung einer Barriereschicht ist ebenfalls unvorteilhaft, da diese ebenfalls die Kosten und die Biegesteifigkeit erhöht.

Die weitere Alternative, nämlich einen wenig dichten Träger mit der aufzutragenden Klebmasseschicht vollständig abzudichten, ist bei Verwendung der für Abdeckklebebänder typischen Klebmasseauftragsmengen zwischen 20 und 50 g/m$^2$ und klassischer Beschichtung aus in Lösemittel oder Wasser gelöster/dispergierter Klebmassen kaum möglich. Ähnlich wie bei der Imprägnierung, entstehen hier durch Trocknung Kapillare oder kleine Hohlräume, welche die Dichtigkeit gegenüber aufgetragener Farbe herabsetzen.

Bislang ging die Fachwelt davon aus, dass die Beständigkeit gegenüber Farbdurchschlag wesentlich auf den physikalischen Eigenschaften des verwendeten Trägermaterials (incl. Berücksichtigung einer Imprägnierung und Lackierung mit einem Releaselack und gegebenenfalls einer weiteren Barriereschicht (Topcoat)) basierte.

Des Weiteren soll Abdeckklebebänder rückstandsfrei wiederablösbar sein.

Die Anforderung geht dabei so weit, dass auch kein "Ghosting" zu erkennen ist.

Unter "Ghosting" oder auch "Geisterbild" werden im Sinne der Erfindung dünnste nichtklebrige Beläge oder Ablagerungen auf einer Oberfläche verstanden, die zu mit dem Auge erkennbaren optischen Veränderungen der Oberfläche führen. Diese Beläge oder Ablagerungen sind hervorgerufen durch ein zuvor mit der Oberfläche in Kontakt befindlich gewesenes Abdeckmaterial. Die Beläge sind dabei oftmals nicht einmal abwischbar, aber visuell wahrnehmbar durch Beobachtung in flachem Winkel gegen eine Lichtquelle. Ghosting ist auf dunklen Lackuntergründen besonders gut zu sehen. Weitere Details zum Phänomen des "Ghosting" werden in der US 2002/098353 A1 beschrieben.

Aufgabe der vorliegenden Erfindung ist es, einen Acrylathaftklebstoff zur Verfügung zu stellen, der insbesondere in einem rückstandsfrei wiederabzulösenden, reversiblen Klebeband Verwendung findet, wobei das Klebeband einen besonders flachen Träger aus Papier von eher offener Struktur, das heißt einer höheren Luftdurchlässigkeit, aufweist, und damit in der Anwendung besonders präzise und flache Farbkanten generiert. Gleichzeit soll ein Durchschlagen von aufgetragener Farbe oder Lack sicher verhindert werden, ohne dass zusätzliche Barrierebeschichtungen verwendet werden müssen.

Gelöst wird diese Aufgabe durch einen Acrylathaftklebstoff, wie er im Hauptanspruch dargelegt ist, sowie durch ein Klebeband, das zusammen mit vorteilhaften Fortbildungen des Erfindungsgegenstandes Gegenstand der Unteransprüche ist. Des Weiteren betrifft die Erfindung Verwendungsvorschläge des erfindungsgemäßen Klebebandes.

Demgemäß betrifft die Erfindung einen Acrylathaftklebstoff, basierend auf Polymeren, die die folgende Monomerzusammensetzung aufweisen:

a) 97 bis 99 Gew.-% Monomere aus der Gruppe 2-Ethylhexylacrylat oder 2-Octylacrylat oder n-Heptylacrylat oder Mischungen aus mindestens zwei der genannten Monomeren oder aus allen drei genannten Monomeren,
b) 1 bis 3 Gew.-% (Meth)acrylsäure

und weiterhin enthaltend ein Vernetzersystem, wobei das Verhältnis der reaktiven Vernetzergruppen und der Carboxygruppen von (Meth)acrylsäure (b) weniger oder gleich 7 % ist, wobei die Polymere durch Emulsionspolymerisation hergestellt werden.

"Auf der Basis von", "basierend" oder "auf der Grundlage von" bedeutet vorliegend, dass die Eigenschaften der Polymermischung zumindest stark von den grundlegenden Eigenschaften dieses Polymers (dem so genannten "Basispolymer") bestimmt werden, wobei selbstverständlich nicht ausgeschlossen ist, dass diese durch Verwendung von modifizierenden Hilfs- oder Zusatzstoffen oder von weiteren Polymeren in der Zusammensetzung zusätzlich beeinflusst werden. Insbesondere kann dies bedeuten, dass der Anteil des Basispolymers an der Gesamtmasse der polymeren Phase mehr als 50 Gew.-% beträgt, vorzugsweise mehr 70 Gew.-%, weiter vorzugsweise mehr als 90 Gew.-%, weiter vorzugsweise mehr als 95 Gew.-%.

Als monomere Acrylate werden vorliegend jene Acrylate verstanden, in denen das Acrylat über eine Carbonyl-Gruppe (C=O) verfügt wie vorzugsweise alle monomeren Acrylate mit einer gegebenenfalls funktionalisierten Stammstruktur C=C-(C=O)-, so dass Acrylamide zu den Acrylaten gerechnet werden und Acrylnitrile zu den ethylenisch ungesättigten Comonomeren. Die monomeren Acrylate sind mono-, di und/oder mehrfunktionelle Acrylate.

Bevorzugt bestehen die Monomere 2-Ethylhexylacrylat, 2-Octylacrylat und n-Heptylacrylat zumindest in Teilen aus nachwachsenden Rohstoffen.

Weiter vorzugsweise erreicht 2-Octylacrylat in der Monomermischung einen Anteil von maximal 85 Gew.-%.

Gemäß einer bevorzugten Ausführungsform der Erfindung wird zur Bildung der Polymere Methacrylsäure eingesetzt, bevorzugt mit einem Anteil von $2 \pm 0,5$ Gew.-%, besonders bevorzugt mit einem Anteil von 2 Gew.-%.

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. EI-Aasser - Wiley-VCH 1997 - ISBN 0-471-96746-7 oder in EP 1 378 527 B1.

Bei der Polymerisation ist es nicht auszuschließen, dass nicht alle Monomere zu Polymeren umgesetzt werden. Dabei ist es naheliegend, dass der Restmonomergehalt möglichst klein sein soll.

Bevorzugt werden Acrylathaftklebstoffe umfassend die Polymerdispersion mit einem Restmonomerengehalt von kleiner gleich 1 Gew.-%, insbesondere kleiner gleich 0,5 Gew.-% (bezogen auf die Masse der Basispolymere) bereitgestellt.

Dem Acrylathaftklebstoff ist ein Vernetzersystem zugesetzt, also zur Vernetzung befähigte Verbindungen.

Wie hier verwendet, steht der Begriff Vernetzersystem oder Vernetzer für chemische Verbindungen, die imstande sind, Molekülketten miteinander zu verbinden, damit sich aus den zweidimensionalen Strukturen über Ausbildung intermolekularer Brücken dreidimensionalvernetzte Strukturen bilden können.

Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung.

Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Dabei kann ein Vernetzer in das Polymer-Netzwerk eingebaut werden.

Gemäß einer bevorzugten Ausführungsform der Erfindung wird das Vernetzersystem gewählt aus der Gruppe aus multifunktionalen Aziridinen, Epoxiden, Carbodiimiden oder Oxazolinen oder Mischungen derselben, bevorzugt gewählt aus der Gruppe Aziridine, Epoxide oder Carbodiimide oder Mischungen derselben.

Besonders bevorzugt ist das Vernetzersystem ein polymeres Aziridin mit einem Molekulargewicht größer 1000 g/mol.

Insbesondere sind keine weiteren Polymere wie Elastomere in dem Acrylathaftklebstoff enthalten, das heißt, die Polymere des Acrylathaftklebstoffs bestehen nur aus den Monomeren in den angegebenen Mengenverhältnissen.

Der Acrylathaftklebstoff ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Zur Erzielung haftklebriger Eigenschaften muss sich die Klebmasse bei der Verarbeitungstemperatur oberhalb ihrer Glastemperatur befinden, um viskoelastische Eigenschaften zu haben. Da die Nutzung bei normaler Umgebungstemperatur (ungefähr zwischen 15°C bis 25 °C) erfolgt, liegt die Glasübergangstemperatur der Haftklebemasseformulierung bevorzugt unterhalb von +15 °C (ermittelt mit DSC (Differential Scanning Calorimetry) gemäß DIN 53765 bei einer Aufheizrate von 10 K/min).

Die Glasübergangstemperatur der Acrylatpolymere lässt sich gemäß der Gleichung von Fox aus den Glasübergangstemperaturen der Homopolymere und ihren relativen Mengenverhältnissen abschätzen).

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur Fox-Gleichung (vergleiche T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}} \qquad (G1)$$

Durch den eventuellen Zusatz von Klebharzen erhöht sich die Glasübergangstemperatur zwangsläufig, je nach Zugabemenge, Verträglichkeit und Erweichungstemperatur um ca. 5 bis 40 K.

Es sind daher Acrylatcopolymere mit einer Glasübergangstemperatur von höchstens 0 °C bevorzugt.

Neben dem Basispolymer auf Acrylatbasis werden dem Acrylathaftklebstoff erfindungsgemäß keine weiteren Polymere zugesetzt.

Erfindungsgemäß sind in dem Acrylathaftklebstoff keine Klebharze zugesetzt.

Unter einem "Klebharz", auch als Klebrigmacher bezeichnet, wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebharzen oder Klebrigmachern zur Steigerung der Klebkräfte von Haftklebemassen ist grundsätzlich bekannt.

Der erfindungsgemäße Acrylathaftklebstoff kann zwischen 1 bis 10 Gew.-Teilen, vorzugsweise 3 bis 7 Gew.-Teilen, weiter vorzugsweise 4 bis 6 Gew.-Teilen Klebharze enthalten, jeweils bezogen auf 100 Gew.-Teile Basispolymer

Als Klebharze sind prinzipiell alle bekannten Stoffklassen geeignet. Klebharze sind beispielsweise Kohlenwasserstoffharze (zum Beispiel Polymere auf Basis ungesättigter $C_5$- oder $C_9$-Monomere), Terpenphenolharze, Polyterpenharze auf Basis von Rohstoffen wie zum Beispiel $\alpha$- oder ß-Pinen, aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Geeignet sind Harze auf Basis von Terpenphenolen und Kolophoniumestern. Geeignet sind auch Harze auf Basis von Terpenphenolen und Kolophoniumestern mit einem Erweichungspunkt oberhalb von 100 °C gemäß ASTM E28-99 (2009). Die Harze werden zweckmäßigerweise in Dispersionsform eingesetzt. Sie lassen sich so problemlos mit der Polymerdispersion feinverteilt mischen. Erfindungsgemäß sind diese Klebharze nicht ausgeschlossen, aber bevorzugt werden diese weggelassen. Neben dem Basispolymer auf Acrylatbasis können dem Acrylathaftklebstoff zusätzlich Zuschlagstoffe wie Lichtschutz- oder Alterungsschutzmitteln in den unten genannten Mengen zugesetzt werden.

Es kann die Klebmasseformulierung beispielsweise optional mit Lichtschutz- oder primären und/oder sekundären Alterungsschutzmitteln abgemischt sein. Bevorzugt weist der erfindungsgemäße Acrylathaftklebstoff keine derartigen Zusätze in Form von Lichtschutz- oder primären und/oder sekundären Alterungsschutzmitteln auf. Als Alterungsschutzmittel können Produkte auf Basis sterisch gehinderter Phenole, Phosphite, Thiosynergisten, sterisch gehinderter Amine oder UV-Absorber eingesetzt werden. Geeignet sind primäre Antioxidantien wie zum Beispiel Irganox 1010 oder Irganox 254, allein oder in Kombination mit sekundären Antioxidantien wie zum Beispiel Irgafos TNPP oder Irgafos 168. Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Geeignet sind auch Alterungsschutzmittel, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelatom auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels beziehungsweise Alterungsschutzmittelpaketes sollte in einem Bereich zwischen 0,1 und 5 Gewichtsteilen bezogen auf die Masse des Basispolymers, bevorzugt in einem Bereich zwischen 0,2 und 3 Gewichtsteilen bezogen auf die Masse des Basispolymers, besonders bevorzugt in einem Bereich zwischen 0,5 und 2 Gewichtsteilen bezogen auf die Masse des Basispolymers liegen.

Zur Verbesserung der Verarbeitungseigenschaften kann die Klebmasseformulierung weiterhin mit üblichen Prozesshilfsmitteln wie Entschäumern, Entlüftern, Netzmitteln oder Verlaufsmitteln abgemischt sein. Geeignete Konzentrationen liegen im Bereich von 0,1 bis zu 5 Gewichtsteilen bezogen auf die Masse des Basispolymers. Bevorzugt weist der erfindungsgemäße Acrylathaftklebstoff keine derartigen Zusätze auf.

Die Scherviskositäten von kommerziellen Dispersionen sind in der Regel zu niedrig. Zur Erzielung der notwendigen Scherviskositäten für den gewählten Applikationsprozess bei der Beschichtung werden im Regelfall Rheologieadditive, auch Verdicker genannt, eingesetzt.

Der Polymerdispersion wird gemäß einer bevorzugten Ausführungsform ein Rheologieadditiv zugesetzt, so dass die Polymerdispersion vor dem Trocken eine Viskosität von 0,5 Pa*s bis zu 5 Pa*s bei einer Scherrate von 10/s aufweist.

Vorzugsweise weist die Polymerdispersion vor dem Trocken eine Viskosität von 1,0 Pa*s bis zu 2,0 Pa*s bei einer Scherrate von 10/s auf.

Die Haftklebemasse enthält gemäß einer bevorzugten Variante der Erfindung zwischen 0,1 bis zu 5 Gewichtsteile Verdicker bezogen auf die Masse des Basispolymers.

Grundsätzlich unterscheidet man hier zwischen organischen und anorganischen Rheologieadditiven. Die organischen Verdicker spalten sich wiederum in zwei wesentliche Wirkprinzipien auf: (i) die Verdickung der wässrigen Phase, also nicht assoziierend, und (ii) Assoziatbildung zwischen Verdickermolekül und Partikeln, zum Teil unter Einbeziehung der Stabilisatoren (Emulgatoren). Vertreter der ersten (i) Stoffgruppe sind wasserlösliche Polyacrylsäuren und Polycoacrylsäuren, die im basischen Medium Polyelektrolyte mit großem hydrodynamischem Volumen bilden. Der Fachmann bezeichnet diese auch kurz als ASE (alkali swellable emulsion). Sie zeichnen sich durch hohe Ruhescherviskositäten und starke Scherverdünnung aus. Eine andere Stoffklasse sind die modifizierten Polysaccharide, insbesondere Celluloseether wie Carboxymethylcellulose, 2-Hydroxyethylcellulose, Carboxymethyl-2-hydroxyethylcellulose, Methylcellulose, 2-Hydroxyethylmethylcellulose, 2-Hydroxyethylethylcellulose, 2-Hydroxypropylcellulose, 2-Hydroxypropylmethylcellulose, 2-Hydroxybutylmethylcellulose. Zusätzlich zählen zu dieser Stoffklasse weniger verbreitete Polysaccharide wie Stärkederivate und spezielle Polyether.

Die Wirkgruppe der (ii) Assoziativverdicker sind im Prinzip Blockcopolymere mit einem wasserlöslichen Mittelblock und hydrophoben Endblöcken, wobei die Endblöcke mit den Partikeln oder sich selbst wechselwirken und dadurch ein Raumnetz unter Einbeziehung der Partikel bilden. Typische Vertreter sind dem Fachmann als HASE (hydrophobically modified alkali swellable emulsion), HEUR (hydrophobically modified ethyleneoxide urethane) oder HMHEC (hydrophobically modified hydroxyethyl cellulose) geläufig. Bei den HASE-Verdickern ist der Mittelblock ein ASE, die Endblöcke sind zumeist über Polyethylenoxidbrücken angekoppelte lange, hydrophobe Alkylketten. Bei den HEUR ist der wasserlösliche Mittelblock ein Polyurethan, beim HMHEC eine 2-Hydroxyethylcellulose. Besonders die nicht-ionischen HEUR und HMHEC sind weitgehend pH unempfindlich.

Je nach Struktur bewirken die Assoziativverdicker mehr oder weniger ein newtonsches (scherratenunabhängiges) oder pseudoplastisches (scherverflüssigendes) Fließverhalten. Mitunter zeigen sie auch einen thixotropen Charakter, das heißt, sie zeigen neben einer Scherkraftabhängigkeit der Viskosität auch eine Zeitabhängigkeit.

Die anorganischen Verdicker sind zumeist Schichtsilikate natürlichen oder synthetischen Ursprungs, Beispiele sind Hektorite und Smektite. Im Kontakt mit Wasser lösen sich die einzelnen Schichten voneinander. Durch unterschiedliche Ladungen an Flächen und Rändern der Plättchen bilden sie in Ruhe eine raumerfüllende Kartenhausstruktur aus, woraus hohe Ruhescherviskositäten bis hin zu Fließgrenzen resultieren. Bei Scherung bricht die Kartenhausstruktur zusammen und es ist ein deutlicher Abfall der Scherviskosität zu beobachten. Je nach Ladung, Konzentration und geometrischen Dimensionen der Plättchen kann der Strukturaufbau einige Zeit in Anspruch nehmen, so dass mit solchen anorganischen Verdickern auch Thixotropie erzielt werden kann.

Die Verdicker lassen sich teilweise direkt in die Klebstoffdispersion einrühren oder werden teilweise zuvor vorteilhaft in Wasser vorverdünnt beziehungsweise vordispergiert.

Anbieter von Verdickern sind zum Beispiel OMG Borchers, Omya, Byk, Dow Chemical Company, Evonik oder Münzing Chemie.

Ebenfalls Gegenstand der Erfindung ist ein Klebeband, umfassend einen Träger, vorzugsweise Papierträger und einen auf mindestens einer Seite des Trägers aufgebrachten erfindungsgemäßen Acrylathaftklebstoff in Form einer getrockneten Polymerdispersion.

Als Träger kommen insbesondere Trägerpapiere zur Verwendung, insbesondere in den ebenfalls bevorzugten Abdeckklebebändern.

Als Papierträger wird erfindungsgemäß vorteilhafterweise Washi-Papier eingesetzt.

In einer vorteilhaften Ausgestaltung der Erfindung liegt das Flächengewicht des Papiers (ohne Berücksichtigung einer eventuellen Imprägnierung oder Lackierung mit einem Trennlack) bei 20 bis 50 g/m$^2$, bevorzugt bei 25 bis 35 g/m$^2$.

Gemäß vorteilhafter Ausführungsformen der Erfindung weist der imprägnierte Papierträger folgende Eigenschaften auf:

(a) Imprägniermitteleintrag zwischen 5 und 25 g/m$^2$, vorzugsweise 9 und 20 g/m$^2$
(b) Dicke zwischen 50 μm und 90 μm, vorzugsweise zwischen 60 μm und 80 μm
(c) Reißdehnung zwischen 3 und 13%, vorzugsweise zwischen 5 und 11% und/oder
(d) Luftdurchlässigkeit kleiner als 20 l/m$^2$s, vorzugsweise kleiner als 5 l/m$^2$s

Es sei an dieser Stelle betont, dass zu den bevorzugten Ausführungsformen der Erfindung auch Varianten gehören, in denen nur ein Merkmal oder eine Kombination von nur zwei der bevorzugten Merkmale verwirklicht ist, während die übrigen Merkmale nicht in den bevorzugten Bereichen liegen, also beispielsweise ein Papierträger, in dem nur die Merkmale (a) und (b) verwirklicht vorliegen, ein Papierträger, in dem nur die Merkmale (a) und (c) verwirklicht vorliegen, usw.

Selbstverständlich umfasst die Erfindung auch die Varianten, in denen gleichzeitig drei der bevorzugten Merkmale vorliegen, also beispielsweise ein Papierträger, in dem die Merkmale (a), (b) und (c) verwirklicht vorliegen, oder ein Papierträger, in dem die Merkmale (a), (b) und (d) verwirklicht vorliegen, usw.

Weiter selbstverständlich umfasst die Erfindung auch die Varianten, in denen gleichzeitig alle vier bevorzugten Merkmale vorliegen, also beispielsweise ein Papierträger, in dem die Merkmale (a), (b), (c) und (d) verwirklicht vorliegen.

Zur Erhöhung der Festigkeit und für eine Mindestabdichtung, speziell unter feuchten Bedingungen, werden die Papiere vor der weiteren Verarbeitung zum Klebeband mit einer Imprägnierung ausgerüstet. Dafür können handelsübliche Imprägniermittel oder eine Kombination derselben eingesetzt werden wie zum Beispiel wässrige Dispersionen eines carboxylgruppenhaltigen Acrylsäureestercopolymerisats oder eines Styrol-Butadien-Copolymerisates, wobei das Stryol-Butadien-Copolymerisat auch Carboxylgruppen enthalten kann. Weiterhin eignen sich auch Imprägniermittel auf Basis von Acrylnitril- Butadien Copolymeren beziehungsweise Styrol-Acrylsäureester-Copolymerisate. Das Flächengewicht des Imprägniermitteleintrags (trocken) kann zwischen 5 g/m$^2$ und 25 g/m$^2$ betragen, vorteilhaft aber zwischen 9 g/m$^2$ und 20 g/m$^2$.

Gemäß einer weiteren vorteilhaften Ausführungsform der Erfindung wird ein Trennmittel direkt auf der Rückseite des Papierträgers, also auf der der Klebemasse gegenüberliegenden Seite, aufgebracht, um somit antiadhäsive Eigenschaften hervorzurufen. Das Abrollen des üblicherweise zu einer archimedischen Spirale aufgewickelten Klebebands wird erleichtert, und es verbleibt die Klebemasse auf der Unterseite des Klebebands, also auf der Seite, auf der die Klebemasse ursprünglich verankert war. Ein unerwünschter Übergang der Klebemasse auf die Rückseite beim Abrollen - dem Fachmann als Umspulen der Klebemasse bekannt - unterbleibt.

Man unterscheidet drei Haupttypen von Trennmitteln, auch Releasebeschichtungen genannt: Zunächst gibt es Trennmittel auf Basis langkettiger Alkylgruppen. Beispiele sind Polyvinylstearylcarbamte, Polyethyleniminstearylcarbamate, Chrom-Komplexe von C$_{14}$- bis C$_{28}$-Fettsäuren und Stearyl-Copolymere (beispielsweise beschrieben in der DE 28 45 541 A). Daneben existieren Acrylpolymere mit perfluorierten Alkylgruppen (US 3,318,852 A), die als Latex oder aus Lösungsmittel aufgebracht werden.

Je nach Anwendungsfall wird das passende Trennmittel gewählt.

Der Masseauftrag (Beschichtungsstärke) der Klebemasse liegt zwischen 20 und 50 g/m$^2$, vorzugsweise zwischen 25 und 40 g/m$^2$, weiter vorzugsweise zwischen 30 und 35 g/m$^2$.

Der Herstellprozess des erfindungsgemäßen Klebebandes erschöpft sich in der Beschichtung des Trägers direkt mit der Dispersion in einem oder mehreren nacheinander durchgeführten Arbeitsgängen.

Als Auftragsaggregate werden die üblichen eingesetzt: Drahtrakel, Streichbalken, Walzenauftrag, Düsenbeschichtung, Doppelkammerrakel, Mehrfachkaskadendüse.

Das erfindungsgemäße Klebeband wird dadurch gebildet, dass auf den Träger partiell oder vollflächig einseitig die Klebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin können die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Gemäß einer vorteilhaften Ausführungsform der Erfindung besteht das Klebeband aus den folgenden Schichten:

- einem imprägnierten Papierträger
- einem auf der Unterseite des Papierträgers aufgebrachten Acrylathaftklebstoff mit einem Masseauftrag von 20 bis 50 g/m$^2$, vorzugsweise zwischen 20 und 40 g/m$^2$,
- einer Trennmittel-/Releaseschicht auf der Oberseite des Papierträgers

- einer Haftvermittler-/Primerschicht auf der Unterseite des Papierträgers

Neben den oben genannten Funktionsschichten kommt keine zusätzliche Funktionsbeziehungsweise Barriereschicht in dem Klebeband zur Anwendung.

Das erfindungsgemäße Klebeband kann mit einem Liner abgedeckt sein. Der Liner für das Produkt oder der Prozessliner ist zum Beispiel ein Trennpapier oder eine Trennfolie, vorzugsweise mit Silikonbeschichtung. Als Träger kommen zum Beispiel Folien aus Polyester oder Polypropylen oder kalandrierte Papiere mit oder ohne Dispersions- oder Polyolefinbeschichtung in Frage.

Ein Liner (Trennpapier, Trennfolie) ist nicht Bestandteil eines Klebebandes, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Bevorzugt wird das mit einem Papierträger ausgerüstete Klebeband als Abdeckband, beispielsweise in Lackierprozessen eingesetzt. Besonders vorteilhaft kann das erfindungsgemäße Band von Profi- oder Hobbymalern im Innen- bzw. bei entsprechend witterungs- und UV-beständig formulierter Klebmasse im Außenbereich eingesetzt werden, zum Beispiel beim Fassadenanstrich, bei Tür- oder Fensterarbeiten sowie anderen hochwertigen Malerarbeiten.

Aus diesem Grund wird das Klebeband vorteilhaft zur vorübergehenden Maskierung eines Untergrundes während eines Lackiervorgangs eingesetzt.

Das erfindungsgemäße Klebeband kann selbstverständlich auch bei der gewerblichen Lackierung von Fahrzeugen, das heißt, in Reparaturbetrieben als auch beim Hersteller von Fahrzeugen eingesetzt werden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Zuschnitte (gestanzt, geschnitten bevorzugt mit Lasern) oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleichbleibend ausgebildet ist.

Das Klebeband kann in Form einer Rolle, also in Form einer archimedischen Spirale auf sich selbst aufgerollt, hergestellt werden.

Die Klebemasse kann in Längsrichtung des Klebebands in Form eines Streifens aufgebracht sein, der eine geringere Breite aufweist als der Träger des Klebebands.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Bevorzugt ist die Klebemasse vollflächig auf dem Träger aufgetragen.

Im Folgenden soll das Klebeband anhand einer Figur näher erläutert werden, ohne damit eine wie auch immer geartete Einschränkung hervorrufen zu wollen.

Es zeigt

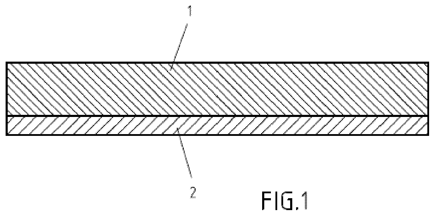

Figur 1    das Klebeband im seitlichen Schnitt.

In der Figur 1 ist im Schnitt in Querrichtung (Querschnitt) das Klebeband gezeigt, das aus einem Papierträger 1 besteht, auf den einseitig eine Schicht eines Acrylathaftklebstoffes 2 aufgebracht ist.

Bevor die Erfindung mittels Beispielen dargestellt wird, werden die verwendeten Messmethoden beschrieben.

**Messmethoden**

**Sofortklebkraft**

Die Bestimmung der Klebkraft (gemäß AFERA 5001) wurde wie folgt durchgeführt. Als Haftgründe wurden eine PVC-Platte (Kömadur H weiß 654 von Thyssen Krupp Plastics GmbH), eine Aluminiumplatte (Legierung 5005A (AIMg1) eloxiert E6EV1 von Rocholl GmbH) sowie ein handelsübliches Sandpapier mit einer 600er Körnung eingesetzt. Für die Ermittlung der Klebkraft wurde das zu untersuchende Klebeband auf eine Breite von 20 mm und eine Länge von 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das verklebbare Flächenelement in einem Winkel von 180 ° vom Haftgrund mit einem Zugprüfungsgerät (Firma Zwick) bei einer Abzugsgeschwindigkeit von v= 300 mm/min abgezogen, und die hierfür bei Normalklima (23 $\pm$ 1 °C, 50 $\pm$ 5 % rel. Feuchte) benötigte Kraft gemessen. Der Messwert (in N/cm) ergab sich als Mittelwert aus drei Einzelmessungen.

Dabei gelten Werte für die Klebkraft von 1,7 bis 2,2 N/cm sowohl auf PVC als auch auf Aluminium für ein Maskingklebeband als optimal und somit erfindungsgemäß.

Werte für die Klebkräfte außerhalb dieser Grenzen beschreiben ein untaugliches Klebeband.

Auf Sandpapier sollte das erfindungsgemäße Maskingklebeband einen Wert von größer 0,6 N/cm aufweisen, um geeignet zu sein. Werte unterhalb von 0,6 N/cm beschreiben ein untaugliches Klebeband.

**Klebkraft nach Lagerung**

Des Weiteren wurde das Aufziehverhalten der untersuchten Klebebänder untersucht (Klebkraft nach Lagerung).

Zur Ermittlung des Aufziehverhaltens wurde das zu untersuchende Klebeband auf eine Breite von 20 mm und eine Länge von 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund (PVC und eloxiertes Aluminium) aufgedrückt. Danach wurden die Platten vier Tage (96 Stunden) lang bei 60 °C und einer relativen Luftfeuchte von 95 % im Klimaschrank gelagert. Nach der Klimalagerung wurden die Platten mindestens 8 Stunden im Normalklima (23 $\pm$ 1 °C, 50 $\pm$ 5 % rel. Feuchte) rekonditioniert und dann wurde analog zu oben beschriebener Klebkraftprüfung die Abzugskraft nach Anwendung mittels Zugprüfmaschine bestimmt und das arithmetische Mittel (in N/cm) aus drei Einzelmessungen ermittelt.

**Aufziehfaktor**

Zur Bewertung des Aufziehverhaltens wird der sogenannte Aufziehfaktor bestimmt. Dieser ergibt sich als Quotient der Klebkraft nach Lagerung auf dem jeweiligen Substrat (PVC bzw. eloxiertes Aluminium) geteilt durch die Sofortklebkraft. Für erfindungsgemäße Zusammensetzungen ist dieser dimensionslose Faktor kleiner als 1,65 was einer sehr geringen Aufziehtendenz entspricht.

**Ghosting**

Zur visuellen Beurteilung von Rückständen beziehungsweise Ghosting werden die zu untersuchenden Klebebänder auf eine Breite von 20 mm und eine Länge von 25 cm auf der PVC-Platte sowie der Aluminiumplatte verklebt. Das Klebeband wird in einem Winkel von 180° von der Lackoberfläche mit einer Geschwindigkeit von 300mm/min abgezogen. Anschließend erfolgt eine visuelle Beurteilung der Rückstände auf der Lackoberfläche in flachem Winkel von 45° gegen eine Lichtquelle nach folgenden Kriterien:

G1: Sauber, keine Rückstände, kein sichtbares Ghosting unter normalem Innenlicht und unter einem Winkel von 45° zur vertikalen Richtung
G2: Sauber, keine Rückstände, sichtbares Ghosting
G3: Sauber, Rückstände, sichtbares Ghosting
G4: Nicht sauber, Rückstände, sichtbares Ghosting

**Rolling Ball Tack**

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:

- Verwendung von Edelstahl-Kugellagerkugeln (Edelstahl 1.4401), Durchmesser 7/16 Zoll, Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 $\pm$ 1 °C, 50 $\pm$ 5 % rel. Feuchte) gelagert
- Jede Kugel wird nur für eine Messung verwendet.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 30 cm langer Streifen des Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

Dabei gelten Werte für den Rolling-Ball-Test von kleiner 50 mm für ein Maskingklebeband als optimal und somit erfindungsgemäß.

Werte für den RBT oberhalb dieser Grenze beschreiben ein untaugliches Klebeband.

## Reißdehnung

Die Reißdehnung wird nach der Prüfmethode AFERA 5004 bestimmt.

## Luftdurchlässigkeit

Die Luftdurchlässigkeit wird nach EN ISO 9237 bestimmt. Die Messfläche beträgt 20 $cm^2$, und es herrscht ein Prüfdruck von 2500 Pa. Die Konditionierung der Prüfmuster erfolgt nach DIN 53802 beziehungsweise ASTM D 1776. Für die eigentliche Prüfung wurde das Luftdurchlässigkeitsprüfgerät TESTER FX3300 der Firma Textest Instruments verwendet. Die dabei gemessene Luftdurchlässigkeit soll weniger als 20 $l/m^2 s$ betragen, vorzugsweise <5 $l/m^2 s$.

## Molekulargewicht

Die Molekulargewichtsbestimmungen der zahlenmittleren Molekulargewichte $M_n$ und der gewichtsmittleren Molekulargewichte $M_w$ erfolgen mittels Gelpermeationschromatographie (GPC). Als Eluent wird THF (Tetrahydrofuran) mit 0,1 Vol.-% Trifluoressigsäure eingesetzt. Die Messung erfolgt bei 23 °C. Als Vorsäule wird PSS-SDV, 10 $\mu$, $10^3$ Ä, ID 8,0 mm x 50 mm verwendet. Zur Auftrennung werden die Säulen PSS-SDV, 10 $\mu$, $10^3$ Ä sowie $10^5$ Ä und $10^7$ Ä mit jeweils ID 8,0 mm x 300 mm eingesetzt. Die Probenkonzentration beträgt 0,5 g/l, die Durchflussmenge 0,5 ml pro Minute. Die Kalibrierung wird mittels des kommerziell verfügbaren ReadyCal-Kits Poly(styrene) high der Firma PSS Polymer Standard Service GmbH, Mainz, durchgeführt. Diese wird anhand der Mark-Houwink-Parameter K und alpha universell in Polymethylmethacrylat (PMMA) umgerechnet, so dass die Angabe der Daten in PMMA-Massenäquivalenten erfolgt.

## Viskositätsmessung

Die Viskositätsmessung wird mit einem Rheometer des Typs ARES (Rheometric Scientific) bei Raumtemperatur und bei einer Schergeschwindigkeit von 10 $s^{-1}$ mit einem Kegel-Platte-System mit einem Durchmesser von 50 mm durchgeführt.

## Beispiele

Das erfindungsgemäße Klebeband wird nachfolgend in bevorzugter Ausführung anhand von Beispielen beschrieben, ohne damit die Erfindung irgendeiner Beschränkung unterwerfen zu wollen.

Des Weiteren sind Vergleichsbeispiele aufgeführt, in denen untaugliche Klebebänder dargestellt sind.

Zur Verdeutlichung des Erfindungsgedankens wurden Polymerdispersionen mit der angegebenen Zusammensetzung erprobt.

Die Beispielklebebänder werden nach folgendem Schema hergestellt:

Die Polymerdispersionen werden je nach Beispiel vor dem Beschichten optional mit einem Vernetzer abgemischt. Dieser wird mithilfe eines Becherrührwerks bei moderater Scherung eingearbeitet. Die so vorbereitete Grundrezeptur wird zur besseren Beschichtbarkeit in der Folge mit einem Rheologieadditiv (BorchiGel 0625, OMG Borchers) auf eine Viskosität von 1000 mPa*s bei einer Scherrate von 10$s^{-1}$ eingestellt. Die verdickten Muster werden mit einem Drahtrakel so auf ein imprägniertes Washipapier (mit einer Grammatur von 50 $g/m^2$) aufgebracht, dass nach der Trocknung über 5 min und 105 °C ein Beschichtungsflächengewicht von ca. 30 $g/m^2$ resultiert.

Tabelle 1: Monomerzusammensetzung (Angaben sind jeweils in Gew.-%)

| Monomer | P1 | P2 | P3 | P4 | P5 | P6 | P7 | P8 | P9 | P10 | P11 | P12 | P13 | P14 | P15 | P16 |
|---|---|---|---|---|---|---|---|---|---|---|---|---|---|---|---|---|
| 2-Ethylhexylacrylat | 98 | | | 40 | | 30 | 98 | 99 | 97 | | | 85 | 40 | 97 | 91 | 93 |

(fortgesetzt)

| Monomer | P1 | P2 | P3 | P4 | P5 | P6 | P7 | P8 | P9 | P10 | P11 | P12 | P13 | P14 | P15 | P16 |
|---|---|---|---|---|---|---|---|---|---|---|---|---|---|---|---|---|
| 2-Octylacrylat | | 98 | | 58 | 84 | 38 | | | | | | | 40 | | | |
| n-Heptylacrylat | | | 98 | | 14 | 30 | | | | | | | | | | |
| n-Octylacrylat | | | | | | | | | | 98 | | | | | | |
| n-Butylacrylat | | | | | | | | | | | 98 | | | 2 | | |
| Acrylnitril | | | | | | | | | | | | | | 1 | | 3 |
| Acrylsäure | | | | | | | 2 | | | | 2 | | 2 | | 1 | 4 |
| Methacrylsäure | 2 | 2 | 2 | 2 | 2 | 2 | | 1 | 3 | 2 | | | | | | |
| Methylmethacrylat | | | | | | | | | | | | 7 | 8 | | 8 | |
| Vinylacetat | | | | | | | | | | | | 6 | 8 | | | |
| Styrol | | | | | | | | | | | | 2 | | | | |
| Hydroxyethylacrylat | | | | | | | | | | | | | 2 | | | |

**Tabelle 2: Formulierung**

| | Polymer | Vernetzer | Formulierung |
|---|---|---|---|
| Gegenbeisp. 1 | P1 | 0 wt% Vernetzer | F1a |
| Gegenbeisp. 2 | P1 | 1 wt% Aziridin | F1b |
| Gegenbeisp. 3 | P1 | 0,25 wt% Epoxid | F1c |
| Gegenbeisp. 4 | P10 | 0,25 wt% Aziridin | F8a |
| Gegenbeisp. 5 | P11 | 0,25 wt% Aziridin | F9a |
| Gegenbeisp. 6 | P12 | 0,25 wt% Aziridin | F10a |
| Gegenbeisp. 7 | P13 | 0,25 wt% Aziridin | F11a |
| Gegenbeisp. 8 | P14 | 0,25 wt% Aziridin | F12a |
| Gegenbeisp. 9 | P15 | 0,25 wt% Aziridin | F13a |
| Gegenbeisp. 10 | P16 | 0,25 wt% Aziridin | F14a |
| Beispiel 1 | P1 | 0,1 wt% Aziridin | F1d |
| Beispiel 2 | P1 | 0,25 wt% Aziridin | F1e |
| Beispiel 3 | P1 | 0,1 wt% Epoxid | F1f |
| Beispiel 4 | P2 | 0,25 wt% Aziridin | F2a |
| Beispiel 5 | P3 | 0,25 wt% Aziridin | F3a |
| Beispiel 6 | P4 | 0,25 wt% Aziridin | F4a |
| Beispiel 7 | P5 | 0,25 wt% Aziridin | F5a |
| Beispiel 8 | P6 | 0,25 wt% Aziridin | F6a |
| Beispiel 9 | P7 | 0,25 wt% Aziridin | F7a |
| Beispiel 10 | P8 | 0,25 wt% Aziridin | F8a |
| Beispiel 11 | P9 | 0,25 wt% Aziridin | F9a |

Als Epoxid-Vernetzer kommt Erisys GA-240 (N,N,N',N'-Tetrakis(2,3-epoxypropyl)-m-xylen-alpha,alpha'-diamin der Firma Emerald Performance Materials) zum Einsatz. Als Aziridin-Vernetzer kommt NeoAdd PAX-521: multifunktioneller polymerer Aziridin Vernetzer der Firma Covestro Deutschland AG zum Einsatz.

| Parameter | | F1a | F1b | F1c | F1d | F1e | F1f |
|---|---|---|---|---|---|---|---|
| Formulierung | | F1a | F1b | F1c | F1d | F1e | F1f |
| Vernetzer | | ohne | PAX-521 (Polyaziridin) | GA-240 (Epoxid) | PAX-521 (Polyaziridin) | PAX-521 (Polyaziridin) | GA240 (Epoxid) |
| Vernetzer % | | 0 | 1 | 0,25 | 0,1 | 0,25 | 0,1 |
| **Klebtechnische Daten** | | | | | | | |
| **Sofortklebkraft, 180°,** | | | | | | | |
| **PVC** | | | | | | | |
| 300 mm/min | 1,7-2,2 | 2,51 | 2,03 | 1,51 | 2,18 | 2,15 | 2,20 |
| **ALU** | | | | - | | | |
| 300 mm/min | 1,7-2,2 | 2,25 | 1,83 | 1,39 | 2,04 | 1,95 | 2,00 |
| **Sandpapier 600 Körnung** | | | | - | | | |
| 300 mm/min | > 0,6 | 1,19 | 0,52 | 0,39 | 0,82 | 0,80 | 1,10 |
| **Klebkraft nach Lagerung60°C/95% r.F. 96h** | | | | | | | |
| **PVC** | | | | | | | |
| 300 mm/min | <4 | 3,61 | 3,19 | 2,43 | 3,55 | 3,45 | 3,23 |
| *Aufziehfaktor (Klebkraft nach Lagerung/ Sofortklebkraft)* | < 1,65 | 1,44 | 1,57 | 1,61 | 1,63 | 1,60 | 1,47 |
| | G1-G4 | G1 | G1 | G1 | G1 | G1 | G1 |
| **ALU** | | | | | | | |
| 300 mm/min | <4 | 3,43 | 2,63 | 2,11 | 3,25 | 3,04 | 2,91 |
| *Aufziehfaktor (Klebkraft nach Lagerung/ Sofortklebkraft)* | < 1,65 | 1,52 | 1,44 | 1,52 | 1,59 | 1,56 | 1,46 |
| | G1-G4 | G1 | G1 | G1 | G1 | G1 | G1 |
| **Rolling Ball Tack** | | | | | | | |
| RBT Mittelwert (mm) | < 50 | 14,8 | 20 | 21,8 | 16,2 | 16,8 | 18,4 |

| Parameter | | F2a | F3a | F4a | F5a | F6a | F7a | F8a | F9a |
|---|---|---|---|---|---|---|---|---|---|
| Formulierung | | F2a | F3a | F4a | F5a | F6a | F7a | F8a | F9a |
| Vernetzer | | PAX-521 (Polyaziridin) | PAX-521 (Polyaziridin) | PAX-521 (Polyaziridin) | PAX-521 (Polyaziridin) | PAX-521 (Polyaziridin) | PAX-521 (Polyaziridin) | PAX-521 (Polyaziridin) | PAX-521 (Polyaziridin) |
| Vernetzer % | | 0,25 | 0,25 | 0,25 | 0,25 | 0,25 | 0,25 | 0,25 | 0,25 |
| **Klebtechnische Daten** | | | | | | | | | |
| **Sofortklebkraft, 180°** | | | | | | | | | |
| **PVC** | | | | | | | | | |
| 300 mm/min | 1,7-2,2 | 2,07 | 2,10 | 2,08 | 2,18 | 2,12 | 2,16 | 2,02 | 2,18 |
| **ALU** | | | | | | | | | |
| 300 mm/min | 1,7-2,2 | 1,83 | 1,96 | 1,79 | 1,78 | 1,89 | 2,02 | 1,91 | 2,07 |
| **Sandpapier 600 Körnung** | | | | | | | | | |
| 300 mm/min | > 0,6 | 0,95 | 1,45 | 0,99 | 0,86 | 0,84 | 0,91 | 0,82 | 0,85 |
| **Klebkraft nach Lagerung 60°C/ 95% r.F. 96h** | | | | | | | | | |
| **PVC** | | | | | | | | | |
| 300 mm/min | <4 | 2,99 | 3,46 | 3,05 | 3,02 | 3,21 | 3,18 | 3,29 | 3,50 |
| *Aufziehfaktor (Klebkraft nach Lagerung/ Sofortklebkraft)* | < 1,65 | 1,44 | 1,65 | 1,47 | 1,39 | 1,51 | 1,47 | 1,63 | 1,61 |
| | G1-G4 | G1 | G1 | G1 | G1 | G1 | G1 | G1 | G1 |
| **ALU** | | | | | | | | | |
| 300 mm/min | <4 | 2,51 | 2,69 | 2,79 | 2,47 | 2,84 | 3,09 | 3,00 | 3,27 |

(fortgesetzt)

| Parameter | | F2a | F3a | F4a | F5a | F6a | F7a | F8a | F9a |
|---|---|---|---|---|---|---|---|---|---|
| Formulierung | | F2a | F3a | F4a | F5a | F6a | F7a | F8a | F9a |
| Vernetzer | | PAX-521 (Polyaziridin) | PAX-521 (Polyaziridin) | PAX-521 (Polyaziridin) | PAX-521 (Polyaziridin) | PAX-521 (Polyaziridin) | PAX-521 (Polyaziridin) | PAX-521 (Polyaziridin) | PAX-521 (Polyaziridin) |
| *Aufziehfaktor (Klebkraft nach Lagerung/ Sofortklebkraft)* | < 1,65 | *1,37* | *1,37* | *1,56* | *1,39* | *1,50* | *1,53* | *1,57* | *1,58* |
| | G1-G4 | *G1* | *G1* | *G1* | *G1* | *G1* | *G1* | *G1* | *G1* |
| **Rolling Ball Tack** | | | | | | | | | |
| RBT Mittelwert (mm) | < 50 | 21,2 | 22 | 19,3 | 24,7 | 21,1 | 18,6 | 17,4 | 19,5 |

| Parameter | | F8a | F9a | F10a | F11a | F12a | F13a | F14a |
|---|---|---|---|---|---|---|---|---|
| Formulierung | | | | | | | | |
| Vernetzer | | PAX-521 (Polyaziridin) | PAX-521 (Polyaziridin) | PAX-521 (Polyaziridin) | PAX-521 (Polyaziridin) | PAX-521 (Polyaziridin) | PAX-521 (Polyaziridin) | PAX-521 (Polyaziridin) |
| Vernetzer % | | 0,25 | 0,25 | 0,25 | 0,25 | 0,25 | 0,25 | 0,25 |
| **Klebtechnische Daten** | | | | | | | | |
| **Sofortklebkraft, 180°,** | | | | | | | | |
| PVC | | | | | | | | |
| 300 mm/min | 1,7-2,2 | 2,50 | 3,26 | 3,56 | 3,81 | 2,30 | 2,37 | 2,42 |
| ALU | | | | | | | | |
| 300 mm/min | 1,7-2,2 | 2,04 | 2,43 | 2,47 | 2,94 | 1,81 | 1,79 | 2,19 |
| **Sandpapier 600 Körnung** | | | | | | | | |
| 300 mm/min | > 0,6 | 1,07 | 1,20 | 1,22 | 1,11 | 0,31 | 0,40 | 0,61 |
| **Klebkraft nach Lagerung 60°C/95% r.F. 96h** | | | | | | | | |
| PVC | | | | | | | | |
| 300 mm/min | <4 | 3,71 | 5,07 | 4,95 | 6,34 | 3,08 | 4,16 | 4,10 |
| *Aufziehfaktor (Klebkraft nach Lagerung/ Sofortklebkraft)* | < 1,65 | 1,48 | 1,56 | 1,39 | 1,66 | 1,34 | 1,76 | 1,69 |
| | *G1 - G4* | *G2* | *G3* | *G3* | *G4* | *G2* | *G1* | *G3* |
| **ALU** | | | | | | | | |
| 300 mm/min | <4 | 2,57 | 5,29 | 9,41 | 5,83 | 3,20 | 3,18 | 5,22 |
| *Klebkraft nach Lagerung/ Sofortklebkraft* | < 1,65 | 1,26 | 2,18 | 3,81 | 1,98 | 1,77 | 1,78 | 2,38 |
| | *G1 - G4* | *G2* | *G4* | *G4* | *G4* | *G2* | *G1* | *G3* |
| **Rolling Ball Tack** | | | | | | | | |
| RBT Mittelwert (mm) | < 50 | 22 | 18 | 35,8 | 54,4 | 29 | 85 | 121,2 |

In den obigen Tabellen sind Werte, die außerhalb der erfindungsgemäß vorgegebenen und geeigneten Parameterbereiche liegen, im Fettdruck und mit Unterstreichung dargestellt.

Die Beispiele 1 bis 3 zeigen, dass die als erfindungsgemäß beanspruchten Monomere in Verbindung mit der erfindungsgemäß beanspruchten Menge an Vernetzern zu Klebebändern führen, die als Maskingklebeband hervorragend geeignet sind.

Gegenbeispiel 1 ist nicht vernetzt, die Abzugskräfte sind viel zu hoch.

Gegenbeispiel 2 ist zu hoch vernetzt, daher wird auf Sandpapier keine ausreichende Haftkraft erzielt.

Gegenbeispiel 3 ist mit einen ungeeignete Vernetzer vernetzt.

Die Beispiel 3 bis 11 spiegeln ebenfalls wider, dass die geeigneten ;Monomere mit einem geeigneten Vernetzer in geeigneter Menge zu Klebeasse führen, die in einem Maskingklebeband eingesetzt werden kann, das alle Anforderungen erfüllt.

Sämtliche Gegenbeispiel 4 bis 10 versagen hinsichtlich der Abzugskraft von PVC.

Des Weiteren zeigen fast alle Gegenbeispiele ein Ghosting von G2 bis G4.

Das erfindungsgemäße Maskingklebeband ist insbesondere für Fahrzeuge vorgesehen wie zum Beispiel Automobile oder für Teile davon wie zum Beispiel Stoßfänger, Motorradtanks, etc. im Lackierprozess. Es dient zur Erzeugung von scharfen Lackkanten und ist zur Anwendung auf ebenen und stark gewölbten Oberflächen und zum Verkleben um sehr enge Kurven geeignet. Das erfindungsgemäße Maskingklebeband zeichnet sich dadurch aus, dass es auch nach hoher thermischer Belastung keine Rückstände und nicht einmal Ghosting auf maskierten kritischen Lackflächen hinterlässt.

**Patentansprüche**

1. Acrylathaftklebstoff, basierend auf Polymeren, die die folgende Monomerzusammensetzung aufweisen:

   (a) 97 bis 99 Gew.-% Monomere aus der Gruppe 2-Ethylhexylacrylat oder 2-Octylacrylat oder n-Heptylacrylat oder Mischungen aus mindestens zwei der genannten Monomere
   (b) 1 bis 3 Gew.-% (Meth)acrylsäure
   und weiterhin enthaltend ein Vernetzersystem, wobei das Verhältnis der reaktiven Vernetzergruppen und der Carboxygruppen von (Meth)acrylsäure (b) weniger oder gleich 7 % ist,
   wobei die Polymere durch Emulsionspolymerisation hergestellt werden.

2. Acrylathaftklebstoff nach Anspruch 1,
   **dadurch gekennzeichnet, dass**
   2-Octylacrylat in der Monomermischung einen Anteil von maximal 85 Gew.-% erreicht.

3. Acrylathaftklebstoff nach einem der Ansprüche 1 oder 2,
   **dadurch gekennzeichnet, dass**
   zur Bildung der Polymere Methacrylsäure eingesetzt wird, bevorzugt mit einem Anteil von 2 ± 0,5 Gew.-%.

4. Acrylathaftklebstoff nach zumindest einem der Ansprüche 1 bis 3,
   **dadurch gekennzeichnet, dass**
   das Vernetzersystem gewählt wird aus der Gruppe aus multifunktionalen Aziridinen, Epoxiden, Carbodiimiden oder Oxazolinen oder Mischungen derselben, bevorzugt gewählt aus der Gruppe Aziridine, Epoxide oder Carbodiimide oder Mischungen derselben, besonders bevorzugt das Vernetzersystem ein polymeres Aziridin ist mit einem Molekulargewicht größer 1000 g/mol.

5. Klebeband, umfassend einen Träger, vorzugsweise Papierträger und einen auf mindestens einer Seite des Trägers aufgebrachten Acrylathaftklebstoff gemäß zumindest einem der vorherigen Ansprüche in Form einer getrockneten Polymerdispersion.

6. Klebeband nach zumindest einem der vorherigen Ansprüche,
   **dadurch gekennzeichnet, dass**
   der Masseauftrag des Acrylathaftklebstoffs auf dem Träger, vorzugsweise Papierträger zwischen 20 und 200 g/m$^2$, vorzugsweise zwischen 25 und 75 g/m$^2$, weiter vorzugsweise zwischen 30 und 50 g/m$^2$ liegt.

7. Klebeband nach zumindest einem der vorherigen Ansprüche,
   **dadurch gekennzeichnet, dass**

das Flächengewicht des Papiers (unter Berücksichtigung einer eventuellen Imprägnierung oder Lackierung mit einem Release) bei 25 bis 250 g/m$^2$, bevorzugt bei 40 bis 200 g/m$^2$, ganz bevorzugt bei 50 bis 90 g/m$^2$ und/oder die Dicke liegt zwischen 50 und 200 $\mu$m, bevorzugt zwischen 50 und 90 $\mu$m liegt.

8. Klebeband nach zumindest einem der vorherigen Ansprüche,
**dadurch gekennzeichnet, dass**

(a) der Imprägniermitteleintrag zwischen 5 und 25 g/m$^2$, vorzugsweise 9 und 20 g/m$^2$ liegt
(b) die Dicke zwischen 50 $\mu$m und 90 $\mu$m, vorzugsweise zwischen 60 $\mu$m und 80 $\mu$m liegt
(c) die Reißdehnung zwischen 3 und 13%, vorzugsweise zwischen 5 und 11% liegt
(d) die Luftdurchlässigkeit kleiner als 20 l/m$^2$s, vorzugsweise kleiner als 5 l/m$^2$s ist

9. Klebeband nach zumindest einem der vorherigen Ansprüche,
**dadurch gekennzeichnet, dass**
das Klebeband die folgenden Eigenschaften aufweist:

• eine Klebkraft auf PVC oder Aluminium von 1,7 bis 2,2 N/cm und/oder
• einen Rolling Ball Tack von kleiner als 50 mm

10. Verwendung eines Klebebands nach zumindest einem der vorherigen Ansprüche als Abdeckband, insbesondere bei einem Lackiervorgang.

11. Verwendung eines Klebebands nach zumindest einem der vorherigen Ansprüche zur vorübergehenden Maskierung eines Untergrundes während eines Lackiervorgangs.

FIG.1

Europäisches
Patentamt

European
Patent Office

Office européen
des brevets

# EUROPÄISCHER RECHERCHENBERICHT

**Nummer der Anmeldung**

**EP 23 19 5934**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/321819 A1 (KIM KEE YOUNG [KR] ET AL) 20. Dezember 2012 (2012-12-20) * Absätze [0001], [0113], [0117]; Beispiel 4; Tabelle 1 * ----- | 1-5,8,9 | INV. C09J7/21 C09J7/38 C09J11/06 C09J133/08 |
| X | US 2008/087196 A1 (ANDERSON KELLY S [US] ET AL) 17. April 2008 (2008-04-17) * Absätze [0004], [0006], [0008] – [0014], [0031], [0061], [0062], [0077], [0082] * ----- | 1,3-5,8,9 | |
| X | US 2021/147720 A1 (TORRE CLAUDIA [DE] ET AL) 20. Mai 2021 (2021-05-20) * Absätze [0001], [0056], [0162]; Tabelle 2 * ----- | 1,2,5,8,9 | |
| X | EP 2 298 846 A1 (TESA SE [DE]) 23. März 2011 (2011-03-23) * Absätze [0001], [0002], [0058], [0059], [0075] – [0078]; Beispiele; Tabellen * ----- | 1,2,5-8,10,11 | RECHERCHIERTE SACHGEBIETE (IPC) C09J C08F C08J |

Der vorliegende Recherchenbericht wurde für alle Patentansprüche erstellt

| Recherchenort | Abschlußdatum der Recherche | Prüfer |
|---|---|---|
| München | 11. Dezember 2023 | Kahl, Philipp |

EPO FORM 1503 03.82 (P04C03)

EP 4 335 911 A1

**ANHANG ZUM EUROPÄISCHEN RECHERCHENBERICHT
ÜBER DIE EUROPÄISCHE PATENTANMELDUNG NR.**

EP 23 19 5934

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-2023

| Im Recherchenbericht angeführtes Patentdokument | Datum der Veröffentlichung | Mitglied(er) der Patentfamilie | Datum der Veröffentlichung |
|---|---|---|---|
| US 2012321819 A1 | 20-12-2012 | CN 102884148 A | 16-01-2013 |
| | | EP 2527416 A2 | 28-11-2012 |
| | | JP 6124111 B2 | 10-05-2017 |
| | | JP 6216955 B2 | 25-10-2017 |
| | | JP 2013520549 A | 06-06-2013 |
| | | JP 2015206043 A | 19-11-2015 |
| | | KR 20110098691 A | 01-09-2011 |
| | | TW 201202376 A | 16-01-2012 |
| | | US 2012321819 A1 | 20-12-2012 |
| | | WO 2011105877 A2 | 01-09-2011 |
| US 2008087196 A1 | 17-04-2008 | AT E458794 T1 | 15-03-2010 |
| | | CN 101517026 A | 26-08-2009 |
| | | EP 2076577 A1 | 08-07-2009 |
| | | JP 5457186 B2 | 02-04-2014 |
| | | JP 2010506979 A | 04-03-2010 |
| | | JP 2014001405 A | 09-01-2014 |
| | | KR 20090066293 A | 23-06-2009 |
| | | US 2008087196 A1 | 17-04-2008 |
| | | US 2008213584 A1 | 04-09-2008 |
| | | WO 2008046000 A1 | 17-04-2008 |
| US 2021147720 A1 | 20-05-2021 | CN 112119137 A | 22-12-2020 |
| | | EP 3569622 A1 | 20-11-2019 |
| | | PL 3569622 T3 | 31-05-2021 |
| | | US 2021147720 A1 | 20-05-2021 |
| | | WO 2019220294 A1 | 21-11-2019 |
| EP 2298846 A1 | 23-03-2011 | DE 102009054955 A1 | 24-03-2011 |
| | | EP 2298846 A1 | 23-03-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2159321 A1
- US 2002098353 A1
- EP 1378527 B1

- DE 2845541 A
- US 3318852 A

**In der Beschreibung aufgeführte Nicht-Patentliteratur**

- **VON PETER A. LOVELL ; MOHAMED S. EI-AASSER.** Emulsion Polymerization and Emulsion Polymers. Wiley-VCH, 1997

- **T.G. FOX.** *Bull. Am. Phys. Soc,* 1956, vol. 1, 123